# EUROPÄISCHE PATENTSCHRIFT

(11) **EP 1 927 017 B1**
(45) Veröffentlichungstag und Bekanntmachung des Hinweises auf die Patenterteilung: **30.03.2011**
(21) Anmeldenummer: 06805743.9
(22) Anmeldetag: 18.09.2006
(51) Int. Cl.: G01S 15/93, G01S 13/93, B60Q 1/48, B62D 15/02

(54) **PARKSYSTEM FÜR KRAFTFAHRZEUGE**
PARKING SYSTEM FOR A MOTOR VEHICLE
SYSTEME DE STATIONNEMENT POUR AUTOMOBILES

(30) Priorität: 22.09.2005 DE 102005045259
(43) Veröffentlichungstag der Anmeldung: 04.06.2008
(73) Patentinhaber: Valeo Schalter und Sensoren GmbH, 74321 Bietigheim-Bissingen (DE)
(72) Erfinder: GOTZIG, Heinrich, 74081 Heilbronn (DE); ECKSTEIN, Oliver, 70736 Fellbach (DE); LEUMALIEU-PAGOP, Raoul, 74321 Bietigheim-Bissingen (DE); VOVKUSHEVSKY, Vsevolod, 74321 Bietigheim-Bissingen (DE)
(74) Vertreter: Pothmann, Karsten
(86) Internationale Anmeldenummer: PCT/EP2006/009044
(87) Internationale Veröffentlichungsnummer: WO 2007/033806

(56) Entgegenhaltungen:
- EP-A- 1 484 620
- WO-A-02/075354
- WO-A-03/070517
- WO-A-2004/053812
- WO-A-2005/047931
- GB-A- 2 321 750

## Beschreibung

Die Erfindung betrifft ein Parksystem für Kraftfahrzeuge, mit Erfassungsmitteln zur Erfassung der Größe einer Parklücke, mit einer Auswerteeinheit, die mit den Erfassungsmitteln gekoppelt ist, und mit einer mit der Auswerteeinheit gekoppelten Mitteilungseinheit zur Mitteilung von die Größe einer Parklücke betreffenden Informationen an einen Fahrer des Kraftfahrzeugs.

Wenn im Rahmen dieser Erfindung von Parklücke die Rede ist, ist ein Parkraum gemeint, der von beliebigen Objekten begrenzt ist. Die Parklücke ist also so begrenzt, dass ein von allen Seiten freies Einparken nicht möglich ist. Eine Parklücke kann beispielsweise durch entlang eines Straßenrands parkende Autos begrenzt sein. Mit einer Parklücke soll aber auch ein in der Tiefe begrenzter Parkraum verstanden werden, bspw. ein Parkhaus-Stellplatz, in den vorwärts oder rückwärts eingeparkt werden kann.

Dadurch, dass besonders in Städten Parkraum nur begrenzt zur Verfügung steht und gleichzeitig die Anzahl der Kraftfahrzeuge zunimmt, ist es wichtig, den zur Verfügung stehenden Parkraum optimal nutzen zu können. Mit den bisher vorgeschlagenen Systemen, die sich noch nicht in einem Serieneinsatz befinden, kann die Parkplatzsuche noch nicht in optimaler Weise unterstützt werden. Im Prinzip übernehmen die bisher vorgeschlagenen Parksysteme nur die Aufgabe eines Einweisers, der dem Fahrer des Kraftfahrzeugs anzeigt, ob eine Parklücke groß genug ist oder nicht.

Aus der WO 2005/047931 ist ein Verfahren zum Bereitstellen von Informationen zum Parallel-Einparken eines Fahrzeugs bekannt, bei welchem dem Fahrer des Fahrzeugs Informationen über das Verhältnis von Fahrzeuglänge und Länge der Parklücke mitgeteilt werden und insbesondere Informationen über die vermessenen Parklücken gespeichert werden.

Eine Einparkhilfe ist aus der WO 2004/053812 bekannt. Dabei werden wiederum Informationen über die Parklücken gespeichert und dem Fahrzeugführer angezeigt.

Der Erfindung liegt die Aufgabe zugrunde, ein Parksystem für Kraftfahrzeuge zu schaffen, das eine optimierte und weitergehende Unterstützung bei der Suche des Fahrers nach einer geeigneten Parklücke schafft.

Diese Aufgabe wird durch ein Parksystem mit den Merkmalen des Anspruchs 1 gelöst. Auch ein Verfahren nach Anspruch 19 löst die gestellte Aufgabe. Außerdem trägt ein Computerprogramm nach Anspruch 20 zur Lösung der genannten Aufgabe bei.

Das erfindungsgemäße Parksystem hat den Vorteil, dass dem Fahrer des Kraftfahrzeugs eine Historie von Parklücken mitgeteilt werden kann. So ist es oft der Fall, dass auf einem Parkplatz oder entlang eines Straßenrands mehrere Parklücken vorhanden sind, die jedoch unterschiedlich groß sind und somit den Fahrer des Kraftfahrzeugs vor entsprechend unterschiedliche hohe Anforderungen stellt. Es ist auch oft der Fall, dass mehrere Parklücken vergleichsweise eng sind, jedoch eine Parklücke zumindest etwas größer ist als die andere, wodurch der Einparkvorgang bereits erheblich erleichtert werden kann. Das erfindungsgemäße Parksystem ist in der Lage solche Parklücken zu erfassen, da es über ein Speichereinheit verfügt, in der Informationen zu mehreren Parklücken abgelegt werden können. So kann dem Fahrer des Kraftfahrzeugs eine Information bereitgestellt werden, welche der zur Verfügung stehenden Parklücken die beste ist. Die die Parklücken betreffenden Informationen umfassen nicht nur die Größe einer Parklücke, sondern auch die Entfernung und/oder die Lage der Parklücke relativ zur aktuellen Position des Kraftfahrzeugs. Mit Hilfe dieser Informationen kann einem Fahrer angezeigt werden, wo er sich gegenwärtig relativ zu einer bereits erfassten Parklücke befindet. Dies ist insbesondere dann hilfreich, wenn eine Parklücke erfasst wurde, die relativ knapp bemessen ist und die der Fahrer des Kraftfahrzeugs zunächst nicht nutzt. Wenn jedoch keine größere Parklücke auffindbar ist, kann der Fahrer zu einem späteren Zeitpunkt auf die zu der nicht genutzten Parklücke gespeicherten Informationen zurückgreifen und sich anzeigen lassen, wo er diese Parklücke finden kann.

Da die Auswerteeinheit mit einem Navigationssystem gekoppelt ist, kann der Fahrer sogar zu der bereits erfassten Parklücke zurückgeleitet werden, was eine erheblicher Erleichterung vor allem für ortsunkundige Fahrer bedeuten kann.

Die bisher aus dem Stand der Technik bekannten Parksysteme erlauben es nur, dem Fahrer jeweils bezogen auf eine Parklücke mitzuteilen, ob diese groß genug ist oder nicht. Demgegenüber kann mit dem erfindungsgemäßen Parksystem eine Historie zu verschiedenen Parklücken erzeugt werden.

Es ist bevorzugt, dass sich der Umfang der Historie entsprechend den Wünschen des Fahrers einstellen lässt. Hierfür ist vorteilhafterweise vorgesehen, dass das Parksystem eine Eingabeeinheit umfasst, mit der folgenden Parameter vorgebbar sind: die Anzahl der Parklücken und/oder die Wegstrecke, entlang der Parklücken gespeichert und/oder mitgeteilt werden sollen und/oder die Zeitdauer, in der Parklücken gespeichert und/oder mitgeteilt werden sollen. Für diese Parameter können Minimalwerte und/oder Maximalwerte und/oder feste Werte vorgegeben werden. Beispielsweise kann ein Fahrer vorgeben, dass die Historie von Parklücken gebildet werden soll, die innerhalb einer Minute entlang einer Wegstrecke von 1 km bei einer minimalen Anzahl von drei Parklücken erfasst werden.

In vorteilhafter Weise ist vorgesehen, dass die Mitteilungseinheit zur Mitteilung folgender Informationen ausgebildet ist: mehrere Parklücken betreffende Informationen gleichzeitig und/oder mehrere Parklücken betreffende Informationen im Wechsel und/oder die Ausdehnung des eigenen Fahrzeugs betreffende Informationen und/oder die Entfernung und/oder die Lage einer Parklücke relativ zur aktuellen Position des Kraftfahrzeugs. So ist es bspw. möglich, dass die Mitteilungseinheit gleichzeitig Informationen mitteilt, die zwei Parklücken gleichzeitig betreffen. Diese Informationen können aber auch im Wechsel mitgeteilt werden. Zusätzlich oder optional können auch Informationen mitgeteilt werden, die die Ausdehnung des eigenen Kraftfahrzeugs betreffen. So kann mit Hilfe der Mitteilungseinheit die Ausdehnung und Position des eigenen Kraftfahrzeugs relativ zu einer erfassten Parklücke graphisch dargestellt werden, wodurch ein Einparkvorgang erleichtert wird. Wenn Informationen bezüglich der Entfernung und/oder Lage einer Parklücke relativ zur aktuellen Position des Kraftfahrzeugs mitgeteilt werden, kann in der oben beschriebenen Weise ein Fahrer zu einer bereits erfassten Parklücke zurückfinden. Insgesamt wird durch die Vielzahl der mitteilbaren Informationen erreicht, dass der Fahrer einen umfassenden Überblick über die zur Verfügung stehenden Parklücken erhält.

In besonders vorteilhafter Weise ist vorgesehen, dass die Mitteilung der Informationen, die mindestens eine Parklücke betreffen, mit der Bewegung des Kraftfahrzeuges gekoppelt ist. So kann während der Bewegung des Kraftfahrzeugs beispielsweise ein Laufbild erzeugt werden, in dem die Parklücken symbolisch dargestellt sind. Bei ortfester Anzeige des eigenen Kraftfahrzeugs läuft das Bild entsprechend der Geschwindigkeit, mit der sich das Kraftfahrzeug fortbewegt, weiter, ähnlich der Anzeige einer Nachrichtenmeldung im Fernsehen mit Hilfe eines laufenden Schriftbands.

Weiterhin ist bevorzugt, dass die Auswerteeinheit die die Parklücken betreffenden Informationen mit fahrzeugspezifischen Werten, insbesondere der Fahrzeuglänge und/oder -breite vergleicht und klassifiziert. Diese Klassifikation sollte mindestens die Klassen "Parklücke ist zu klein" und "Parklücke ist groß genug" umfassen. Zwischen diesen genannten Klassen können weitere Zwischenklassen liegen.

Es kann vorgesehen sein, dass die Klassifikationsgrenzen durch den Fahrer des Kraftfahrzeugs vorgebbar sind. So kann ein geschickter Fahrer die Klassifikationsgrenzen so verschieben, dass auch eine relativ knappe Parklücke als groß genug dargestellt wird. Es ist aber auch möglich, dass die Klassifikationsgrenzen beeinflussbar sind, indem der Fahrer des Kraftfahrzeugs in eine klassifizierte Parklücke einparkt oder nicht. Wenn beispielsweise der Fahrer in eine als groß genug mitgeteilte Parklücke nicht einparkt, kann dies so interpretiert werden, dass der Fahrer beim Einparkvorgang eine größere Sicherheit wünscht. Dementsprechend kann die Klassifikationsgrenze so verschoben werden, dass auch noch relativ großzügig bemessene Parklücken als zu klein mitgeteilt werden. Somit kann ein adaptives, selbstlernendes Parksystem geschaffen werden.

Die eine oder mehrere Parklücken betreffenden Informationen können in unterschiedlicher Intensität und/oder Quantität und/oder Qualität und insbesondere optisch und/oder akustisch mitgeteilt werden. Eine Möglichkeit hierfür ist die Verwendung von Signaltönen, deren Tonhöhe und/oder -länge und/oder -abfolge entsprechend der Klassifikation einer Parklücke kodiert sein kann.

Eine weitere Möglichkeit der Art der Mitteilung der Information besteht darin, dass eine Parklücke betreffende Informationen mit der Klassifikation einer Parklücke entsprechenden Symbolen darstellbar sind. Hierfür bietet sich beispielsweise die Verwendung eines Daumensymbols an, dessen Richtung anzeigt, ob die Parklücke groß genug ist (Daumen nach oben gerichtet), ob die Parklücke vergleichsweise knapp bemessen ist (Daumen waagerecht) oder ob die Parklücke zu klein ist (Daumen nach unten gerichtet).

Eine besonders vorteilhafte Möglichkeit der Mitteilung der die Parklücken betreffenden Informationen wird geschaffen, wenn diese Information durch mit der Größe der Parklücken korrespondierende, also maßstäbliche Anzeigeflächen dargestellt sind. Somit korrespondiert eine große Anzeigefläche mit einer großen Parklücke und eine kleine Anzeigefläche mit einer kleinen Parklücke. Die Anzeigefläche kann sowohl hinsichtlich der Länge als auch hinsichtlich der Breite einer Parklücke mit der tatsächlichen Größe der Parklücke korrespondieren.

Die Symbole oder Anzeigeflächen können entsprechend der Klassifikation einer Parklücke und/oder in Helligkeitsstufen und/oder in mit unterschiedlichen Frequenzen blinkender Darstellung kodiert sein. Hierfür bieten sich Farben an, die durch vielfache Gewöhnung dem Fahrer bereits einen gewissen Sinngehalt vermitteln. So kann eine zu kleine Parklücke mit der Farbe Rot dargestellt werden, eine knappe Parklücke mit der Farbe Gelb und eine ausreichend große Parklücke mit der Farbe Grün. In entsprechender Weise können die Symbole oder Anzeigeflächen jedoch auch hinsichtlich ihrer Helligkeitsstufen oder hinsichtlich ihrer Frequenz bei blinkender Darstellung kodiert sein.

Eine weitere vorteilhafte Ausführungsform der Erfindung sieht vor, dass die Erfassungsmittel zur Erfassung der Größe einer Parklücke Teil eines Systems zur Erfassung von Hindernissen in der Umgebung des Kraftfahrzeugs sind. Auf diese Weise kann die Anzahl der am Kraftfahrzeug angeordneten Erfassungsmittel oder Sensoren reduziert werden.

Die Erfindung betrifft ferner ein Verfahren zur Unterstützung des Fahrers eines Kraftfahrzeugs bei der Suche nach einem Parkplatz.

Weiterhin betrifft die Erfindung eine Auswerteeinheit für ein Parksystem, sowie ein Computerprogramm, das auf der Auswerteeinheit ablauffähig ist.

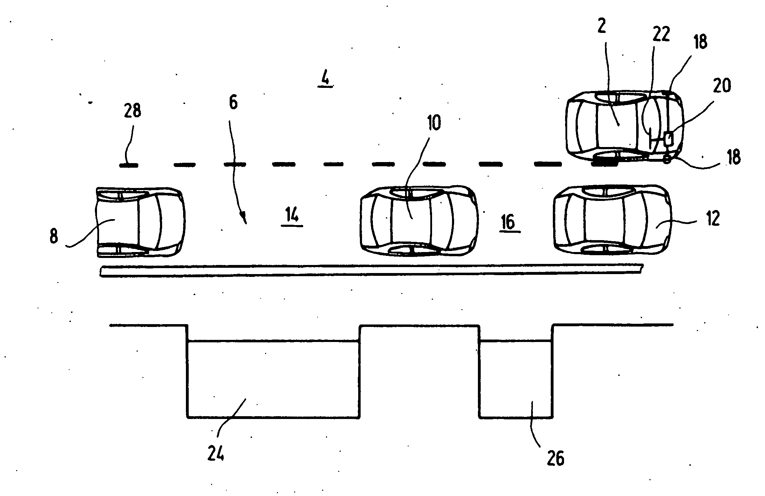

Die Erfindung wird im Folgenden anhand eines besonders bevorzugten Ausführungsbeispiels unter Bezugnahme auf die folgende Beschreibung und die Zeichnung näher erläutert. In der Zeichnung ist eine Draufsicht auf ein Kraftfahrzeug 2, das auf einer Straße 4 fährt, dargestellt. Entlang des Straßenrands 6 der Straße 4 sind parkende Fahrzeuge 8, 10 und 12 angeordnet. Zwischen den parkenden Fahrzeugen 8 und 10 ist eine vergleichsweise große Parklücke 14 und zwischen den Fahrzeugen 10 und 12 eine vergleichsweise kleine Parklücke 16 ausgebildet.

Das Kraftfahrzeug 2 weist seitlich benachbart zu seinem vorderen Stoßfänger zwei Erfassungsmittel 18 auf, die beispielsweise als Ultraschallsensor ausgebildet sein können. Die Erfassungsmittel 18 sind mit einer Auswerteeinheit 20 gekoppelt, diese wiederum mit einer Mitteilungseinheit 22. Die Mitteilungseinheit 22 umfasst einen in der Zeichnung nicht dargestellten Bildschirm, der für den Fahrer des Kraftfahrzeugs 2 sichtbar ist. Auf diesem Bildschirm sind u.a. zur Größe der Parklücken 14 und 16 korrespondierende Anzeigeflächen 24 und 26 dargestellt.

Wenn das Kraftfahrzeug 2 an den parkenden Fahrzeugen 18 und 12 vorbeifährt, bewegt sich das Erfassungsmittel 18 entlang des mit Bezugszeichen 28 angedeuteten Bewegungsweges des Kraftfahrzeugs 2. Dabei können die seitlich zu den Erfassungsmitteln 18 angeordneten Hindernisse, in diesem Fall die parkenden Fahrzeuge 8, 10 und 12 und die zwischen diesen Hindernissen vorhandenen Parklücken 14 und 16 erfasst werden. Die Auswerteeinheit 20 misst die Länge der Parklücken 14 und 16 entlang des Bewegungswegs 28 und vergleicht diese Werte mit einem Vergleichswert, der die Faktoren Länge, Radstand und Wendekreis des Kraftfahrzeugs 2 berücksichtigt. Beispielsweise ist die Parklücke 14 so groß, dass sie eine vorgegebene Klassifikationsgrenze überschreitet und die Parklücke 14 der Klasse "Parklücke ist groß genug" zugeordnet werden kann. Dies ist für den Fahrer deutlich sichtbar, indem die Anzeigefläche 24 vergleichsweise groß ist und mit grüner Farbe kodiert ist. Hingegen ist die zweite Parklücke 16 als zu klein klassifiziert und somit für den Fahrer mit einer vergleichsweise kleinen Anzeigefläche 26 angezeigt. Zusätzlich ist die Anzeigefläche 26 mit roter Farbe kodiert.

Die Anzeigeflächen 24 und 26 sind Teil eines Laufbilds, das auf dem Bildschirm der Mitteilungseinheit 22 dargestellt ist, wobei die Bewegung des Laufbilds mit der Bewegung des Kraftfahrzeugs 2 entlang der parkenden Fahrzeuge 8, 10 und 12 korrespondiert.

## Patentansprüche

1. Parksystem für Kraftfahrzeuge (2), mit Erfassungsmitteln (18) zur Erfassung der Größe einer Parklücke (14, 16), mit einer Auswerteeinheit (20), die mit den Erfassungsmitteln (18) gekoppelt ist, und mit einer mit der Auswerteeinheit (20) gekoppelten Mitteilungseinheit (22) zur Mitteilung von dieParklücke (14, 16) betreffenden Informationen an einen Fahrer des Kraftfahrzeugs (2), wobei der Auswerteeinheit (20) eine Speichereinheit zugeordnet ist, in welcher Informationen ablegbar sind, welche die Größe, die Entfernung und/oder die Lage der Parklücke (14, 16) relativ zur aktuellen Position des Kraftfahrzeugs betreffen und welche die Erfassungsmittel (18) entlang einer vorgegebenen Wegstrecke des Kraftfahrzeugs (2) und/oder innerhalb einer vorgegebenen Zeitdauer erfassen, wobei die Auswerteeinheit (20) und die Mitteilungseinheit (22) derart ausgebildet sind, dass die in der Speichereinheit abgelegten Informationen dem Fahrer des Kraftfahrzeugs (2) mitteilbar sind, **dadurch gekennzeichnet, dass** die Auswerteeinheit (20) mit einem Navigationssystem so gekoppelt ist, dass der Fahrer zu der bereits erfassen Parklücke zurückgeleitet werden kann.

2. Parksystem nach Anspruch 1, **dadurch gekennzeichnet, dass** das Parksystem eine Eingabeeinheit umfasst, mit der die folgenden Parameter vorgebbar sind:
- die Anzahl der Parklücken (14, 16), über die Informationen gespeichert und/oder mitgeteilt werden sollen und/oder
- die Wegstrecke, entlang der Parklücken (14, 16) gespeichert und/oder mitgeteilt werden sollen und/oder
- die Zeitdauer, in der Parklücken (14, 16) gespeichert und/oder mitgeteilt werden sollen.

3. Parksystem nach Anspruch 2, **dadurch gekennzeichnet, dass** ein Minimalwert und/oder ein Maximalwert und/oder ein fester Wert des oder der Parameter vorgebbar ist.

4. Parksystem nach mindestens einem der vorhergehenden Ansprüche, **dadurch gekennzeichnet, dass** die Mitteilungseinheit (22) zur Mitteilung folgender Informationen ausgebildet ist:
- mehrere Parklücken (14, 16) betreffende Informationen gleichzeitig und/oder
- mehrere Parklücken (14, 16) betreffende Informationen im Wechsel und/oder
- die Ausdehnung des Kraftfahrzeugs (2) betreffende Informationen und/oder
- die Entfernung und/oder die Lage einer Parklücke relativ zur aktuellen Position des Kraftfahrzeugs (2).

5. Parksystem nach mindestens einem der vorhergehenden Ansprüche, **dadurch gekennzeichnet, dass** die Mitteilung der Informationen, die mindestens eine Parklücke (14, 16) betreffen, mit der Bewegung des Kraftfahrzeugs (2) gekoppelt ist.

6. Parksystem nach mindestens einem der vorhergehenden Ansprüche, **dadurch gekennzeichnet, dass** die Auswerteeinheit (20) die die Parklücken (14, 16) betreffenden Informationen mit fahrzeugspezifischen Werten, insbesondere der Fahrzeuglänge und/oder -breite vergleicht und klassifiziert.

7. Parksystem nach Anspruch 6, **dadurch gekennzeichnet, dass** die Klassifikation mindestens die Klassen "Parklücke ist zu klein" und "Parklücken ist groß genug" umfasst.

8. Parksystem nach Anspruch 7, **dadurch gekennzeichnet, dass** die Klassifikation mindestens eine Zwischenklasse umfasst.

9. Parksystem nach mindestens einem der Ansprüche 6 bis 8, **dadurch gekennzeichnet, dass** die Klassifikationsgrenzen durch den Fahrer des Kraftfahrzeugs (2) vorgebbar sind.

10. Parksystem nach mindestens einem der Ansprüche 6 bis 9, **dadurch gekennzeichnet, dass** die Klassifikationsgrenzen beeinflussbar sind, indem der Fahrer des Kraftfahrzeugs (2) in eine klassifizierte Parklücke (14, 16) einparkt oder nicht.

11. Parksystem nach mindestens einem der vorhergehenden Ansprüche, **dadurch gekennzeichnet, dass** die die Parklücken (14, 16) betreffenden Informationen in unterschiedlicher Intensität und/oder Quantität und/oder Qualität mitteilbar sind.

12. Parksystem nach mindestens einem der vorhergehenden Ansprüche, **dadurch gekennzeichnet, dass** die die Parklücken (14, 16) betreffenden Informationen optisch und/oder akustisch mitteilbar sind.

13. Parksystem nach mindestens einem der vorhergehenden Ansprüche, **dadurch gekennzeichnet, dass** die die Parklücken betreffenden Informationen mit der Klassifikation einer Parklücke (14, 16) entsprechenden Signaltönen mitteilbar sind.

14. Parksystem nach Anspruch 13, **dadurch gekennzeichnet, dass** die Signaltöne entsprechend der Klassifikation einer Parklücke (14, 16) in der Tonhöhe und/oder -länge und/oder -abfolge kodiert sind.

15. Parksystem nach mindestens einem der vorhergehenden Ansprüche, **dadurch gekennzeichnet, dass** die die Parklücken (14, 16) betreffenden Informationen mit der Klassifikation einer Parklücke (14, 16) entsprechenden Symbolen darstellbar sind.

16. Parksystem nach mindestens einem der vorhergehenden Ansprüche, **dadurch gekennzeichnet, dass** die die Parklücken (14, 16) betreffenden Informationen durch mit der Größe der Parklücken (14, 16) korrespondierende Anzeigeflächen (24, 26) darstellbar sind.

17. Parksystem nach Anspruch 15 oder 16, **dadurch gekennzeichnet, dass** die Symbole oder Anzeigeflächen (24, 26) entsprechend der Klassifikation einer Parklücke (14, 16) farblich und/oder in Helligkeitsstufen und/oder in mit unterschiedlichen Frequenzen blinkender Darstellung kodiert sind.

18. Parksystem nach mindestens einem der vorhergehenden Ansprüche, **dadurch gekennzeichnet, dass** die Erfassungsmittel (18) zur Erfassung der Größe einer Parklücke (14, 16) Teil eines Systems zur Erfassung von Hindernissen in der Umgebung des Kraftfahrzeugs (2) sind.

19. Verfahren zur Unterstützung des Fahrers eines Kraftfahrzeugs (2) bei der Suche nach einem Parkplatz (14, 16), unter Verwendung eines Parksystems nach mindestens einem der vorhergehenden Ansprüche, umfassend die folgenden Schritte:
- Erfassungsmittel (18) des Parksystems erfassen entlang einer vorgegebenen Wegstrecke des Kraftfahrzeugs (2) und/oder innerhalb einer vorgegebenen Zeitdauer Informationen, die zumindest die Größe einer Parklücke (14,16) betreffen,
- die Informationen werden in der Speichereinheit abgelegt, die der Auswerteeinheit (20) des Parksystems zugeordnet ist,
- die in der Speichereinheit abgelegten Informationen werden dem Fahrer des Kraftfahrzeugs (2) mitgeteilt, wobei die Auswerteeinheit (20) mit einem Navigationssystem so gekoppelt ist, das der Fahrer zu der bereits erfassten Parklücke zurückgeleitet werden kann.

20. Computerprogramm, das auf einer Auswerteeinheit (20) ablauffähig ist, **dadurch gekennzeichnet, dass** das Computerprogramm derart programmiert ist, dass ein Verfahren nach Anspruch 19 durchgeführt wird, wenn das Computerprogramm auf der Auswerteeinheit abläuft.

21. Computerprogramm nach Anspruch 20, **dadurch gekennzeichnet, dass** das Computerprogramm auf einem Speicherelement gespeichert ist, wobei das Speicherelement als Diskette, Compact Disk (CD), Digital Versatile Disk (DVD) und/oder mindestens als eine Komponente der Speichereinheit des Parksystems nach Anspruch 1 ausgebildet ist.

## Claims

1. Parking system for motor vehicles (2), having sensing means (18) for sensing the size of a parking space (14, 16), having an evaluation unit (20) which is coupled to the sensing means (18), and having an information unit (22) which is coupled to the evaluation unit (20) and has the purpose of conveying information relating to the parking space (14, 16) to a driver of the motor vehicle (2), wherein the evaluation unit (20) is assigned a memory unit in which it is possible to store information which relates to the size, the distance and/or the position of the parking space (14, 16) relative to the current position of the motor vehicle and which is sensed by the sensing means (18) along a predefined route of the motor vehicle (2) and/or within a predefined time period, wherein the evaluation unit (20) and the conveying unit (22) are embodied in such a way that the information stored in the memory unit can be conveyed to the driver of the motor vehicle (2), **characterized in that** the evaluation unit (20) is coupled to a navigation system in such a way that the driver can be directed back to the parking space which has already been sensed.

2. Parking system according to Claim 1, **characterized in that** the parking system comprises an input unit with which the following parameters can be predefined:
- the number of parking spaces (14, 16), about which information is to be stored and/or conveyed, and/or
- the route along which parking spaces (14, 16) are to be stored and/or conveyed, and/or
- the time period in which parking spaces (14, 16) are to be stored and/or conveyed.

3. Parking system according to Claim 2, **characterized in that** a minimum value and/or a maximum value and/or a fixed value of the parameter or parameters can be predefined.

4. Parking system according to at least one of the preceding claims, **characterized in that** the conveying unit (22) is designed to convey the following information:
- information relating to a plurality of parking spaces (14, 16) simultaneously and/or
- information relating to a plurality of parking spaces (14, 16) alternately, and/or
- information relating to the extent of the motor vehicle (2), and/or
- the distance and/or the position of a parking space relative to the current position of the motor vehicle (2).

5. Parking system according to at least one of the preceding claims, **characterized in that** the conveying of the information which relates to at least one parking space (14, 16) is coupled to the movement of the motor vehicle (2).

6. Parking system according to at least one of the preceding claims, **characterized in that** the evaluation unit (20) compares and classifies information relating to the parking spaces (14, 16) with vehicle-specific values, in particular the length and/or width of the vehicle.

7. Parking system according to Claim 6, **characterized in that** the classification comprises at least the classes "parking space is too small" and "parking space is large enough".

8. Parking system according to Claim 7, **characterized in that** the classification comprises at least one intermediate class.

9. Parking system according to at least one of Claims 6 to 8, **characterized in that** the classification boundaries can be predefined by the driver of the motor vehicle (2).

10. Parking system according to at least one of Claims 6 to 9, **characterized in that** the classification boundaries can be influenced by the driver of the motor vehicle (2) parking, or not parking, in a classified parking space (14, 16).

11. Parking system according to at least one of the preceding claims, **characterized in that** the information relating to the parking spaces (14, 16) can be conveyed with a different intensity and/or in a different quantity and/or with a different quality.

12. Parking system according to at least one of the preceding claims, **characterized in that** the information relating to the parking spaces (14, 16) can be conveyed visually and/or acoustically.

13. Parking system according to at least one of the preceding claims, **characterized in that** the information relating to the parking spaces can be conveyed with signal tones corresponding to the classification of a parking space (14, 16).

14. Parking system according to Claim 13, **characterized in that** the signal tones are coded in accordance with the classification of a parking space (14, 16) in the pitch of the tone and/or length of the tone and/or tone sequence.

15. Parking system according to at least one of the preceding claims, **characterized in that** the information relating to the parking spaces (14, 16) can be displayed with symbols corresponding to the classification of a parking space (14, 16).

16. Parking system according to at least one of the preceding claims, **characterized in that** the information relating to the parking spaces (14, 16) can be displayed by display areas (24, 26) corresponding to the size of the parking spaces (14, 16).

17. Parking system according to Claim 15 or 16, **characterized in that** the symbols or display areas (24, 26) are coded through colour in accordance with the classification of a parking space (14, 16) and/or in brightness levels and/or in a display which flashes at different frequencies.

18. Parking system according to at least one of the preceding claims, **characterized in that** the sensing means (18) for sensing the size of a parking space (14, 16) are part of a system for sensing obstacles in the surroundings of the motor vehicle (2).

19. Method for assisting the driver of a motor vehicle (2) in searching for a parking space (14, 16), using a parking system according to at least one of the preceding claims, comprising the following steps:
- sensing means (18) of the parking system sense, along a predefined route of the motor vehicle (2) and/or within a predefined time period, information which relates to at least the size of a parking space (14, 16),
- the information is stored in the memory unit which is assigned to the evaluation unit (20) of the parking system, and
- the information which is stored in the memory unit is conveyed to the driver of the motor vehicle (2), wherein the evaluation unit (20) is coupled to a navigation system in such a way that the driver can be directed back to the parking space which has already been sensed.

20. Computer program which can run on an evaluation unit (20), **characterized in that** the computer program is programmed in such a way that a method is carried out according to Claim 19 when the computer program runs on the evaluation unit.

21. Computer program according to Claim 20, **characterized in that** the computer program is stored on a memory element, wherein the memory element is embodied as diskette, compact disc (CD), digital versatile disc (DVD) and/or at least one component of the memory unit of the parking system according to Claim 1.

## Revendications

1. Système de stationnement pour véhicules automobiles (2), comprenant des moyens de détection (18) pour détecter la taille d'une place de stationnement (14, 16), comprenant une unité d'interprétation (20) qui est connectée aux moyens de détection (18) et comprenant une unité de communication (22) connectée avec l'unité d'interprétation (20) pour communiquer des informations concernant la place de stationnement (14, 16) à un conducteur du véhicule automobile (2), une unité de mémoire étant associée à l'unité d'interprétation (20), dans laquelle peuvent être stockées des informations qui concernent la taille, l'éloignement et/ou la position de la place de stationnement (14, 16) par rapport à la position actuelle du véhicule automobile et qui sont acquises par les moyens de détection (18) le long d'un trajet prédéfini du véhicule automobile (2) et/ou pendant un intervalle de temps prédéfini, l'unité d'interprétation (20) et l'unité de communication (22) étant configurées de telle sorte que les informations stockées dans l'unité de mémorisation peuvent être communiquées au conducteur du véhicule automobile (2), **caractérisé en ce que** l'unité d'interprétation (20) est connectée avec un système de navigation de telle sorte que le conducteur peut être guidé en arrière vers la place de stationnement déjà détectée.

2. Système de stationnement selon la revendication 1, **caractérisé en ce que** le système de stationnement comprend une unité de saisie qui permet de prédéfinir les paramètres suivantes :
- le nombre de places de stationnement (14, 16) sur lesquelles il faut mémoriser et/ou communiquer des informations et/ou
- les trajets le long desquels il faut mémoriser et/ou communiquer des places de stationnement (14, 16) et/ou
- la durée pendant laquelle il faut mémoriser et/ou communiquer des places de stationnement (14, 16).

3. Système de stationnement selon la revendication 2, **caractérisé en ce qu'**il est possible de prédéfinir une valeur minimale et/ou une valeur maximale et/ou une valeur fixe du ou des paramètres.

4. Système de stationnement selon au moins l'une des revendications précédentes, **caractérisé en ce que** l'unité de communication (22) est configurée pour communiquer les informations suivantes :
- simultanément des informations concernant plusieurs places de stationnement (14, 16) et/ou
- en alternance des informations concernant plusieurs places de stationnement (14, 16) et/ou
- des informations concernant l'étendue du véhicule automobile (2) et/ou
- l'éloignement et/ou la position d'une place de stationnement par rapport à la position actuelle du véhicule automobile (2).

5. Système de stationnement selon au moins l'une des revendications précédentes, **caractérisé en ce que** la communication des informations qui concernent au moins une place de stationnement (14, 16) est connectée avec le mouvement du véhicule automobile (2).

6. Système de stationnement selon au moins l'une des revendications précédentes, **caractérisé en ce que** l'unité d'interprétation (20) compare les informations qui concernent les places de stationnement (14, 16) avec des valeurs spécifiques aux véhicule, notamment la longueur et/ou la largeur du véhicule, et les classifie.

7. Système de stationnement selon la revendication 6, **caractérisé en ce que** la classification comprend au moins les classes « place de stationnement trop petite » et « place de stationnement assez grande ».

8. Système de stationnement selon la revendication 7, **caractérisé en ce que** la classification comprend au moins une classe intermédiaire.

9. Système de stationnement selon l'une des revendications 6 à 8, **caractérisé en ce que** les limites de classification peuvent être prédéfinies par le conducteur du véhicule automobile (2).

10. Système de stationnement selon au moins l'une des revendications 6 à 9, **caractérisé en ce que** les limites de classification peuvent être influencées **en ce que** le conducteur du véhicule automobile (2) stationne ou non dans une place de stationnement (14, 16) classifiée.

11. Système de stationnement selon au moins l'une des revendications précédentes, **caractérisé en ce que** les informations concernant les places de stationnement (14, 16) peuvent être communiquées dans des intensités et/ou des quantités et/ou des qualités différentes.

12. Système de stationnement selon au moins l'une des revendications précédentes, **caractérisé en ce que** les informations concernant les places de stationnement (14, 16) peuvent être communiquées sous forme visuelle et/ou sonore.

13. Système de stationnement selon au moins l'une des revendications précédentes, **caractérisé en ce que** les informations concernant les places de stationnement peuvent être communiquées avec des tonalités de signalisation correspondant à la classification d'une place de stationnement (14, 16).

14. Système de stationnement selon la revendication 13, **caractérisé en ce que** les tonalités de signalisation peuvent être codées en hauteur et/ou durée et/ou séquence sonore en fonction de la classification d'une place de stationnement (14, 16).

15. Système de stationnement selon au moins l'une des revendications précédentes, **caractérisé en ce que** les informations concernant les places de stationnement (14, 16) peuvent être représentées avec des symboles correspondant à la classification d'une place de stationnement (14, 16).

16. Système de stationnement selon au moins l'une des revendications précédentes, **caractérisé en ce que** les informations concernant les places de stationnement (14, 16) peuvent être représentées avec des zones d'affichage (24, 26) correspondant à la taille des places de stationnement (14, 16).

17. Système de stationnement selon la revendication 15 ou 16, **caractérisé en ce que** les symboles ou les zones d'affichage (24, 26) sont codé(e)s par un affichage en couleur et/ou en niveaux de luminosité et/ou clignotant à des fréquences différentes en fonction de la classification d'une place de stationnement (14, 16).

18. Système de stationnement selon au moins l'une des revendications précédentes, **caractérisé en ce que** les moyens de détection (18) pour détecter la taille d'une place de stationnement (14, 16) font partie d'un système de détection d'obstacles dans l'environnement du véhicule automobile (2).

19. Procédé d'assistance du conducteur d'un véhicule automobile (2) lors de la recherche d'une place de stationnement (14, 16) en utilisant un système de stationnement selon au moins l'une des revendications précédentes, comprenant les étapes suivantes :
- des moyens de détection (18) du système de stationnement détectent, le long d'un trajet prédéfini du véhicule automobile (2) et/ou pendant un intervalle de temps prédéfini, des informations qui concernent au moins la taille d'une place de stationnement (14, 16),
- les informations sont stockées dans l'unité de mémorisation qui est associée à l'unité d'interprétation (20) du système de stationnement,
- les informations stockées dans l'unité de mémorisation sont communiquées au conducteur du véhicule automobile (2),
l'unité d'interprétation (20) étant connectée avec un système de navigation de telle sorte que le conducteur peut être guidé en arrière vers la place de stationnement déjà détectée.

20. Programme informatique qui peut être exécuté sur une unité d'interprétation (20), **caractérisé en ce que** le programme informatique est programmé de telle sorte qu'un procédé selon la revendication 19 est mis en oeuvre lorsque le programme informatique est exécuté sur l'unité d'interprétation.

21. Programme informatique selon la revendication 20, **caractérisé en ce que** le programme informatique est mémorisé sur un élément de mémorisation, l'élément de mémorisation étant réalisé sous la forme d'une disquette, d'un disque compact (CD), d'un disque polyvalent numérique (DVD) et/ou au moins sous la forme d'un composant de l'unité de mémorisation du système de stationnement selon la revendication 1.
